# EUROPEAN PATENT SPECIFICATION

(11) **EP 1 848 151 B1**
(45) Date of publication and mention of the grant of the patent: **15.10.2008**
(21) Application number: 06112791.6
(22) Date of filing: 20.04.2006
(51) Int. Cl.: H04L 12/24, H04L 12/26

(54) **Method and apparatus for configuring service equipment elements in a network**
Verfahren und Vorrichtung zur Konfigueration von Service Elemente in einem Netz
Méthode et Systeme pour la configuration d'équipement de service dans un réseau

(43) Date of publication of application: 24.10.2007
(73) Proprietor: NTT DoCoMo, Inc., Tokyo (JP)
(72) Inventor: Eyermann, Frank, 85521, Ottobrunn (DE); Racz, Peter, 8002, Zurich (CH); Schaefer, Christian, 85764, Oberschleissheim (DE); Stiller, Burkhard, 8603, Schwarzenbach (CH); Walter, Thomas, 80935, Munich (DE)
(74) Representative: Betten & Resch

(56) References cited:
- EP-A- 1 420 549
- US-A1- 2002 191 622
- US-A1- 2003 065 778
- US-A1- 2004 174 879
- US-B1- 6 516 417
- MARQUES V ET AL: "A simple QoS service provision framework for beyond 3dgeneration scenarios" TELECOMMUNICATIONS, 2003. ICT 2003. 10TH INTERNATIONAL CONFERENCE ON FEB. 23 - MAR. 1, 2003, PISCATAWAY, NJ, USA,IEEE, vol. 2, 23 February 2003 (2003-02-23), pages 1475-1481, XP010638014 ISBN: 0-7803-7661-7

## Description

### FIELD OF THE INVENTION

The present invention relates to a method and an apparatus for configuring service equipment in a network.

### BACKGROUND OF THE INVENTION

Currently, mobile and wireless networks are offered widely, which need to be administered in a global multiple provider environment. This leads to an environment where multiple mobile network operators are involved and where mobile users utilise different communication paths, but where the operator still needs a guaranteed service accounting as well as a basis for auditing service qualities.

The area of mobile and wireless communications for data shows the need for ensuring that a certain level of Quality-of-Service (QoS) can be guaranteed. Even if those guarantees may be granted technology-wise, the operation of a network may show intermittent errors or break-downs of antennas. Thus, for commercial services there is the demand on monitoring and measurement mechanisms, which will enable the provider and user to verify the currently delivered service quality with the one negotiated in advance and located, normally legally bound, in a Service Level Agreement (SLA).

Such a verification has to be made along the used data path and has to involve service equipment which is located in the data path and is able to measure one or more service parameters, e.g. bandwidth, data rate, etc. in order to be able to verify that the service is provided in accordance with the service level agreement. Such a checking of a compliance of a service provisioning with a service level agreement is referred to as auditing. Thus there is a need to determine a data path in advance so that auditing and accounting can be performed with minimal effort and with a minimal number of network management components being involved, and there is further the need to configure any service equipment in the data path. This is necessary e.g. in order to inform the service equipment of the type of service parameter to be measured or monitored (e.g. data rate) and further, if auditing is to be performed, about the details of the service level agreement to enable the service equipment to check whether the measured parameters are in compliance with the SLA.

US-2002/0191622 discloses method for routing internet traffic. The method generally includes the steps of receiving a packet from multimedia network, allocating a message block header for the packet, wherein the header is used to hold behaviour aggregate values four internal router mapping, and queuing and routing the packet to a differentiated services network domain in a manner that ensures a specific QoS.

### SUMMARY OF THE INVENTION

According to one embodiment there is provided a method for configuring a plurality of service equipment elements located along a data path connecting two elements in a network, said network comprising a plurality of administration servers, each administration server being responsible for configuring a respectively different plurality of service equipment elements, said method comprising:
sending a trial-balloon message along said data path, said trial-balloon message when being received by a service equipment element in said data path causing said service equipment element to contact its corresponding administration server and said trial-balloon message further being forwarded by said service equipment element by which it was received to the next service equipment element in said data path;
said administration servers in response to being contacted by their respective service equipment elements configuring said service equipment elements in accordance with context information received by said administration servers through said service equipment elements.

The mechanism uses a "trial-balloon" which is a kind of a probe travelling along the data path and initiates the performing of an automated configuration of service equipment elements along said data path. This can be done in accordance with context information which may be specific for the data path, and thereby the operation of service equipment elements can be configured in a decentralised and adaptive manner in accordance with the requirements.

According to one embodiment said service equipment elements have a metering functionality and said configuration of said service equipment elements by said administration servers comprises to configure them in order to enable them to perform a metering which can be used to monitor the service quality along said data path as to whether it is in compliance with a service level agreement.

According to one embodiment the method further comprises:
forwarding said trial-balloon message by said service equipment elements to their respective administration servers;
if one of said administration servers decides to participate in an auditing process, forwarding by said administration server an inform-managing-administration-server message to the managing administration server being the server which is responsible for the network attachment server where the caller is attached to said network;
in response to said inform-managing-administration-server message, sending by said managing administration server context information to said administration server to enable said administration server to configure said service equipment in accordance with auditing and/or accounting requirements indicated by said context information.

The information of the managing administration server enables it to be aware of any additional service equipment elements which want to or can join the accounting and auditing process. Moreover, it enables the managing administration server to transmit the necessary context to the administration server so that the administration server is able to configure its corresponding service equipment in accordance with the service level agreement.

According to one embodiment, if an answer to the trial-balloon message is not returned to the sender within a timeout period, the trial-balloon message is retransmitted.
This compensates any errors which may occur during initial transmissions.

According to one embodiment each trial-balloon message contains a hop-by-hop options header identifying the trial-balloon message, wherein each network access server blocks messages having this hop-by-hop options header if the messages come from a mobile terminal.
This prevents attacks which could be performed by mobile terminals generating trial-balloon messages.

According to one embodiment the service equipment elements which should be configured participate in the auditing and/or accounting of a session running between a caller and a destination or a callee;
the trial-balloon message is dispatched by the network access server to which the caller is attached and the trial-balloon message containing the session ID of the auditing and/or accounting sessions in which the service equipment elements should participate.

The mechanism may be particularly applied to any communications session between a caller and its destination, let it be a callee or any service provider or other communication partner. The dispatching of the trial-balloon message by the NAS of the caller is preferable because this is the first node in the communication path after the mobile terminal. Moreover, it may be triggered by the managing administration server which keeps the generation and processing of the trial-balloon mechanism inside the network and under control of the managing server, thereby making it difficult to use it for an attack.

According to one embodiment the dispatching of the trial-balloon message is performed in response to a send trial-balloon command forwarded from the managing administration server of the network access server to which the caller is attached to the said network access server. This gives the managing administration server the control over the trial-balloon mechanism, while the mechanism still is decentralised since each administration server may act as managing administration server if it is the managing server for a caller.

According to one embodiment there is provided an apparatus for configuring a plurality of service equipment elements located along a data path connecting two elements in a network, said network comprising a plurality of administration servers, each administration server being responsible for configuring a respectively different plurality of service equipment elements, said apparatus comprising:
a sending unit for sending a trial-balloon message along said data path, said trial-balloon message when being received by a service equipment element in said data path causing said service equipment element to contact its corresponding administration server and said trial-balloon message further being forwarded by said service equipment element by which it was received to the next service equipment element in said data path;
said administration server being adapted to in response to being contacted by their respective service equipment elements configure said service equipment elements in accordance with context information received by said administration servers.

Such an apparatus is suitable for implementing an embodiment of the invention.

According to one embodiment there is provided a service equipment element apparatus located along a data path connecting two elements in a network, said network comprising a plurality of administration servers, each administration server being responsible for configuring a respectively different plurality of service equipment elements, said service equipment element apparatus comprising:
a receiving unit for receiving a trial-balloon message;
a sending unit for forwarding said trial-balloon message by said service equipment element apparatus to the next service equipment element in said data path,
said service equipment element apparatus being adapted to contact its corresponding administration server in response to reception of said trial-ballon;
said service equipment element apparatus further being adapted to be configured by said administration server in response to said administration server being contacted by said service equipment element apparatus to configure said service equipment element apparatus in accordance with context information received by said administration server.

According to one embodiment there is provided an administration server apparatus located in a network comprising a plurality of service equipment elements located along a data path connecting two elements in said network, said administration server apparatus being responsible for configuring one or more service equipment elements, said administration server apparatus comprising:
a receiving unit for receiving a contacting message from one or more of said service equipment elements in response to said service equipment element having received a trial-balloon message, said trial-balloon message when being received by a service equipment element in said data path causing said service equipment element to contact its corresponding administration server by said contacting message and said trial-balloon message further being forwarded by said service equipment element by which it was received to the next service equipment element in said data path;
a configuration unit being adapted to configure, in response to said receiving unit being contacted by said contacting message by said respective service equipment element, said service equipment element in accordance with context information received by said administration server.

According to one embodiment said service equipment elements have a metering functionality and said configuration of said service equipment elements by said administration servers comprises to configure them in order to enable them to perform a metering which can be used to monitor the service quality along said data path as to whether it is in compliance with a service level agreement.

According to one embodiment the apparatus further comprises:
means for forwarding said trial-balloon message by said service equipment elements to their respective administration servers;
means for if one of said administration servers decides to participate in an auditing and/or accounting process, forwarding by said administration server an inform-managing-administration-server message to the managing administration server being the server which is responsible for the network attachment server where the caller is attached to said network;
means for sending in response to said inform-managing-administration-server message by said managing administration server context information to said administration server to enable said administration server to configure said service equipment in accordance with auditing and/or accounting requirements indicated by said context information.

According to one embodiment there is provided a computer program comprising computer executable code which when being executed on a computer causes said computer to carry out a method according to embodiments of the invention.

In one embodiment there is performed an automatic configuration of service equipment elements like routers and meters located in a message's data path and having metering functionality to guarantee for suitable measurements of information required for the accounting and auditing support of Quality-of-Service (QoS)-enabled services. The mechanism is applicable in order to determine the data path from the source device to a destination device, while all measurement points, typically routers and meters, on that path as well as their respective administration servers such as managing A4C (Authentication, Authorisation, Accounting, Auditing, and Charging) servers will be selected to configure appropriate accounting and auditing measurements. The method supports the automated configuration of such measurements points which may even be located in different administrative domains.

According to one embodiment the method is based on extensions defined for the Diameter base protocol, including additionally newly defined attribute value pairs and their usage in a distributed manner. In this case the mechanism utilises an underlying protocol algorithm (the Diameter message forwarding) for the distribution of data, which can be applied in a fully decentralised manner and specifies special attribute value pairs of information to be defined for a communication and messages exchanged between all participating entities, such as administration or A4C severs in the local and remote domain as well as routers and meters on the data path selected.

According to one embodiment the trial-balloon message is generated by the network access server when a user on his/her mobile terminal requests a service and sets up a connection to another user. When forwarding the trial-balloon message, the message is intercepted by routers and meters and which forward a copy of the message to their administration server (e.g. their managing A4C) server as well as forward a copy towards the next router and meter on the path to the destination. The A4C server joins the accounting and auditing process and configures the routers and meters, respectively.

The mechanism in accordance with embodiments of the invention is an enabling technology for session-orientated accounting and auditing:
1. The process allows correlating collected data to sessions.
2. In contrast to collect data about all sessions it allows an operator to decide
   a) to support accounting and auditing for a larger number of sessions, or
   b) to use simpler and therefore cheaper hardware, or
   c) to offer a detailed, precise and valuable accounting and auditing data.

### DESCRIPTION OF THE DRAWINGS

Fig. 1 schematically illustrates a configuration in which an embodiment of the invention may be used.
Fig. 2 schematically illustrates a network configuration in accordance with an embodiment of the invention.
Fig. 3 schematically illustrates a further network configuration and a message flow in accordance with an embodiment of the invention.
Fig. 4 schematically illustrates a sequence diagram in accordance with an embodiment of the invention.
Fig. 5 schematically illustrates trial-balloon message forwarding in accordance with an embodiment of the invention.
Fig. 6 schematically illustrates an instantiation of a trial-balloon process in accordance with a further embodiment of the invention.
Fig. 7 schematically illustrates a trial-balloon captured request in accordance with an embodiment of the invention.
Fig. 8 schematically illustrates an Inform-Managing-Server-Request in accordance with an embodiment of the invention.

### DETAILED DESCRIPTION

Accounting and, more importantly, auditing are tasks that are being performed on network devices along the data path from a source mobile device to a destination mobile device. Network devices are routers and other packet-forwarding devices. If such a device supports the accounting and auditing tasks then this device is called a *meter.* The embodiments described hereinafter may be used for an accounting and auditing support for mobile network operators, but the process is equally well applicable for fixed network operators. Furthermore, the method is applicable for multicast communications as well with the change that several data paths towards multiple destination mobile devices have to be considered.

In the following some definitions and the terminology used throughout the following description are introduced.
o *A4C server:* These are administration servers responsible for service equipment elements, and they may take the form of Authentication, Authorisation, Accounting, Auditing, and Charging servers (A4C) which are responsible for user authentication, authorisation, accounting, auditing, and charging of service sessions within and between operator domains. The focus in the following description, however, will lie on accounting and auditing functions, especially on auditing functions and their underlying metering functionality.
   A4C servers may build a hierarchy during the accounting process for the communication. This hierarchy helps to support interactions between operators in an easier way, i.e. an operator can define a specific server (i.e. gateway) to form the interface toward other operators or a set of operators, reducing the configuration effort for an inter-domain communication.
o *Roles of A4C servers:* An A4C server can have three different roles, according to its responsibility in the accounting and auditing process. The A4C server in the domain of the home operator, which performs user authentication and authorisation as the user first attaches to the network, will co-ordinate the accounting and auditing process. This A4C server is called *server at HO.* This server will not change for the entire service session.
   The A4C server responsible for the Network Access Server (NAS) where a user's mobile terminal is currently attached to is called *managing A4C server (or managing administration server or managing server).* The *managing server* will change as the user moves from one NAS to another. The role of the *managing server* allows for keeping the management effort close to the current location of the user, to reduce signalling, and to improve scalability.
   The third role, called *remote A4C server* refers to A4C servers being in charge of service equipment elements (SEs) that participate in the accounting and auditing process but are associated to A4C servers other than the current *managing server* and that need to be configured.
o *Service equipment elements (SE)* provide different kinds of services in the network. Some of them are actively participating in service provisioning and the user is aware of their existence, e.g., a web server. Other SEs are not directly visible for the user, but are still required in the service provisioning process, e.g., routers, traffic meters and network access servers; the latter are attachment points where a mobile terminal is identified and network access is granted.
   For the embodiments of this invention SEs that are meters are particularly important as these take part in the accounting and auditing. The purpose of the trial-balloon process described hereinafter in somewhat more detail is to identify meters on the data path from a source mobile terminal to a destination mobile terminal. If meters are once identified, subsequently the configuration of these meters for accounting and auditing can take place.
o Diameter commands: The Diameter protocol is defined in Calhoun, P.; Loughney, J.; Guttman, E.; Zorn, G. and Arkko, J.,"RFC 3855 - Diameter Base Protocol", 2003. It defines a number of commands which are initiated by Diameter peers (i.e. A4C servers or SEs). Commands are always defined as Request and Answer pairs. Commands carry parameters which are defined as attribute-value-pairs.
o Attribute-Value-Pair (AVP): The Diameter protocol consists of a header followed by one or more AVPs. An AVP includes a header and is used to encapsulate protocol-specific data (e.g., routing information) as well as authentication, authorization or accounting and auditing information.
o A4C: Authentication, Authorisation, Accounting, Auditing, and Charging
o FO: Foreign Operator
o HO: Home Operator
o NAS: Network Access Server
o R+M: Router with metering capability
o QoS: Quality-of-Service
o SLA: Service Level Agreement

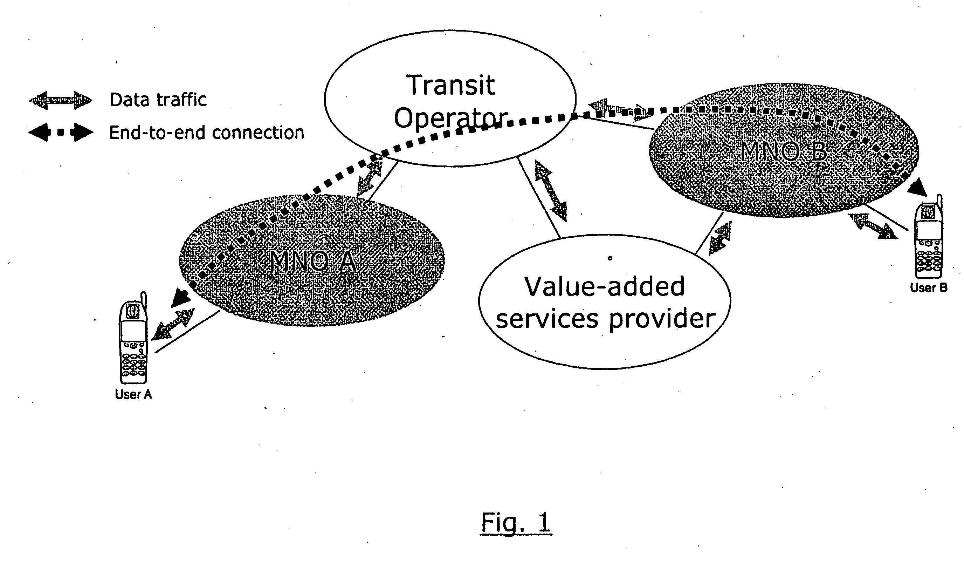

Before explaining in detail an operation of an embodiment of the invention at first a description of an environment in which the embodiment may be employed will be made in connection with Fig. 1.

Figure 1 shows a data path extending from the mobile terminal of user A to the mobile terminal of user B. The data path extends along the coverage areas of a first mobile network operator MNO A, a second mobile network operator MNO B, and a transit operator located between them. The connection between user A and user B may further involve services provided by a value-added services provider also indicated in Figure 1.

If the connection should maintain a certain service quality, as has been agreed before in a service level agreement, the service quality should be monitored. Such a monitoring process can also be referred to as "auditing". To perform an auditing it is necessary to measure parameters of the communications along the data path such as the throughput or the data rate, possibly also other parameters.

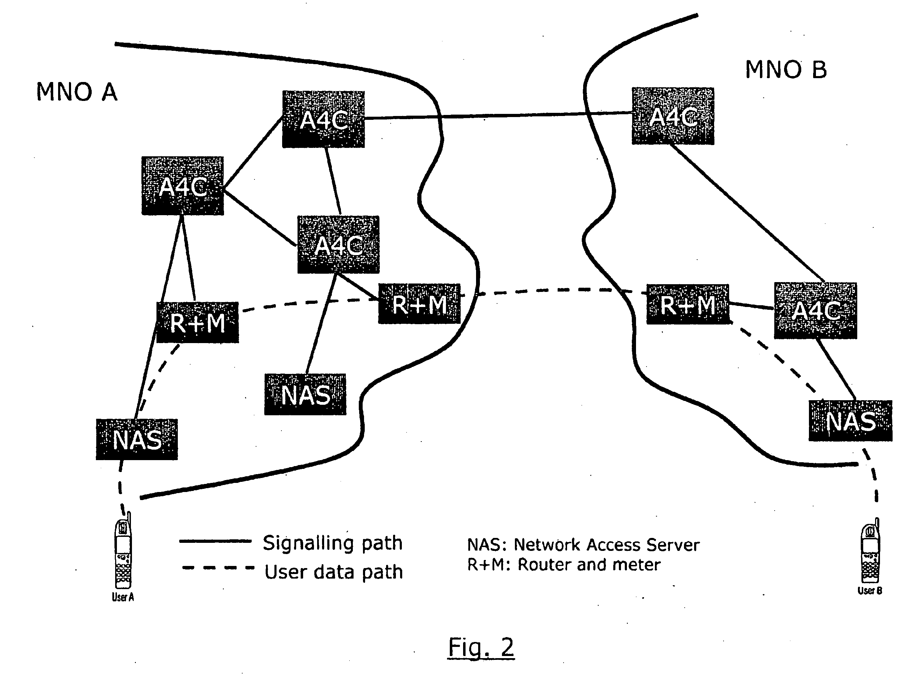

Figure 2 now illustrates in somewhat more detail the configuration in which such an auditing can be performed. User A is attached to the network MNO A to a network attachment server NAS shown on the left-hand side, and user B is attached to another network attachment server shown on the right-hand side. The data path connecting both users extends through certain elements illustrated as R+M which are routers which in addition to their routing functionality have a metering functionality which enables them to measure parameters such as the data rate. Such a measurement can be made in accordance and specifically for a certain session, if the meters are configured accordingly. There may further be located along the data path additional meters which have no routing but just metering functionality, however, which are not shown in Figure 2. For simplicity reasons in Fig. 2 the transit operator is not shown, however, according to one embodiment one or more transit operator may be included.

The routers and meters (R+M) are administrated and configured by respectively different administration servers, which are in the embodiment shown in Figure 2 so-called authentication, authorization, accounting, auditing and charging (A4C) servers. Each A4C server may be responsible for a plurality of routers and meters, however, each router and meter has only one administration server (A4C server) which is responsible for it and performs its configuration. As can be seen from Figure 2, the A4C servers may communicate among each other which may be necessary in order to perform an accounting within a network domain and especially if a foreign domain is involved.

In order to perform a suitable metering which enables the check whether the connection along the data path from user A to user B is in accordance with the service level agreement, the routers and meters have to be configured. This is achieved by the method according to embodiments of the invention which will be described hereinafter and which will be referred to as trial-balloon process because it is based on a message referred to as "trial-balloon" which travels along the data path and like a trial-balloon along its traveling path carries out - if not measurements - at least operations initiating a measurement or the configuration of measurements, namely the configurations of the routers and meters. In this manner the trial-balloon is a kind of a "probe" initially dispatched in order to initiate and trigger the configuration of the routers and meters, which are a specific type of service equipment elements, and which are located along the data path.

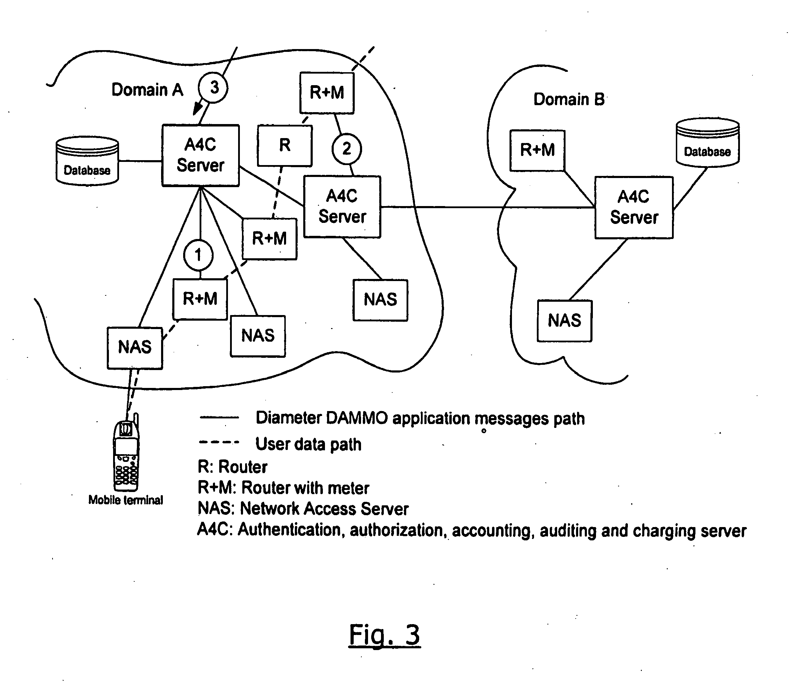

Figure 3 schematically illustrates a network configuration showing the situation of two interconnected domains A and B in which the trial-Balloon message is used. The network configuration of Domain A consists of three NASs, three routers + meters (R+M), one router (R) and two A4C servers. The database holds the user data, SLAs, accounting and auditing configuration data, etc. The A4C servers have links to NASs and routers + meters they are managing, i.e., used for configuring accounting and auditing processes, collecting accounting and auditing records, etc. The trial-balloon message in this embodiment originates from the NAS in charge of the mobile terminal and is forwarded along the data path (dashed line). The first R+M passed generates the message number 1 (a message referred to as Trial-Balloon-Captured-Request) which informs its managing A4C server about the captured trial-balloon message. The A4C server receiving this message, in this case the managing A4C server which is also responsible for the NAS, issues an SE-Configure-Request to configure the R+M possibly also to the second R+M on the data path. In this case the R+M does not have to inform its A4C server anymore and just passes the trial-balloon message on to the third R+M. In the other case a Trial-Balloon-Captured-Request is also sent from the second R+M to the A4C server and the A4C server then configures the second R+M.

If the trial-balloon message reaches the third R+M on the data path, the R+M generates message number 2 illustrated in Fig. 3 (trial-balloon captured message) to inform its corresponding A4C server and sends it to its A4C server. Based on the mobile terminal IP address contained in the received message the A4C server checks its Realm Based Routing table which contains information which A4C server is responsible for which range of IP addresses. Based thereupon it can determine the first A4C server as being responsible for the user terminal/source mobile device and it generates a message for the first A4C server which adds to its Session Definitions table an entry containing the second A4C server's IP address. In this manner the A4C servers may then communicate with each other.

The procedure in another domain (schematically illustrated by message number 3) is equal as for message number 2, with the exception, that A4C servers (remote and managing one) may not be allowed to communicate directly with each other.

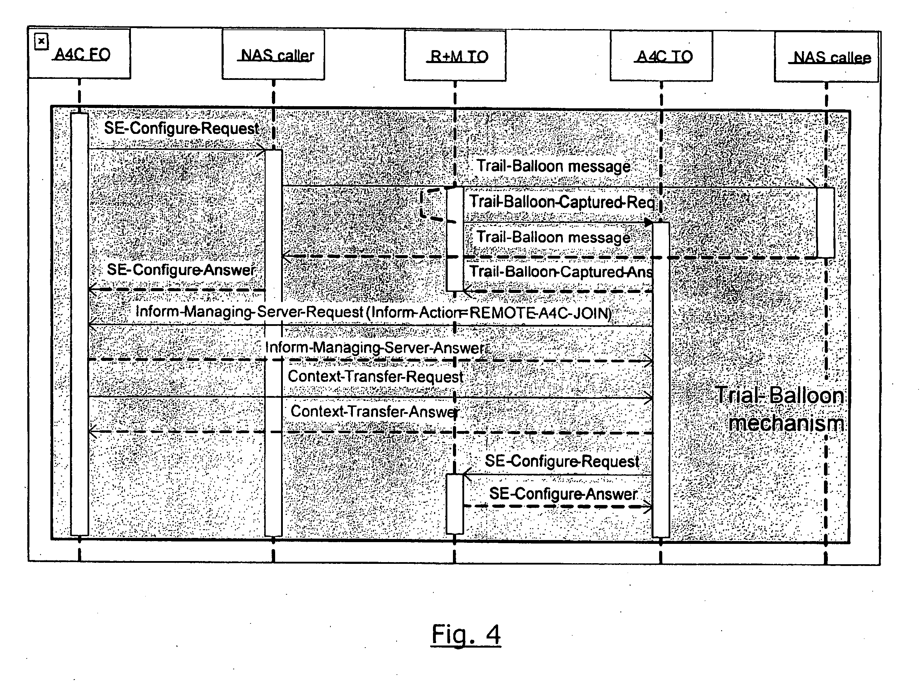

The trial-balloon process, i.e. the sequence of commands between involved A4C servers and meters, is schematically illustrated in Fig. 4. There is sent a so-called *trial-balloon message* along the data path from the source mobile device towards the destination mobile device. In one embodiment the trial-balloon message is generated by the network attachment point (i.e. NAS of the caller in Fig. 4) of the source mobile device upon request of its managing A4C server, is passed onwards on the data path to the next SE (i.e. R+M in Fig. 4) until it reaches the attachment point (i.e. NAS callee in Fig. 4) of the destination mobile device where it is deleted and a trial-balloon answer is sent back. If during a session the data path changes then the trial-balloon process has to be re-started in order to configure meters on the newly established data path.

On its path toward the destination, each service equipment element SE such as a router and meter R+M makes a local copy of the trial-balloon message before forwarding the trial-balloon message as shown in Fig. 4. The local copy can be used for further decision making by the SE as will be explained below (R+M in Fig. 4) as well as the A4C server. According to one embodiment, if SE and A4C server take part in the accounting and auditing process then the A4C server which received a trial-balloon captured message sends a specific command, i.e. a command labelled Inform-Managing-Server-Request (see Fig. 4), back to the managing A4C server that initiated the trial-balloon process. The address of the managing server may be stored in the payload of the trial-balloon message to enable that the Inform-Managing-Server-Request may be sent directly to the managing server.

In response, the managing A4C server confirms receipt of the Inform-Managing-Server-Request and starts the transfer of configuration data (by sending a Context-Transfer-Request command) to the A4C server from which it received the Inform-Managing-Server-Request. With the received configuration data, the A4C server starts the configuration of SEs for accounting and auditing of user data traffic.

According to a further embodiment which is not illustrated in Fig. 4 the A4C server configures the SE once it has been informed by the SE through the trial-balloon captured request, whereas the configuration is based on context data defining details of the SLA so that the configuration can be made accordingly. The context data according to one embodiment may already be contained in the trial-balloon message. According to a further embodiment the SE may obtain the context data, e.g. from the database or the managing A4C server once it has received the trial-balloon message and forwards it to the A4C server.

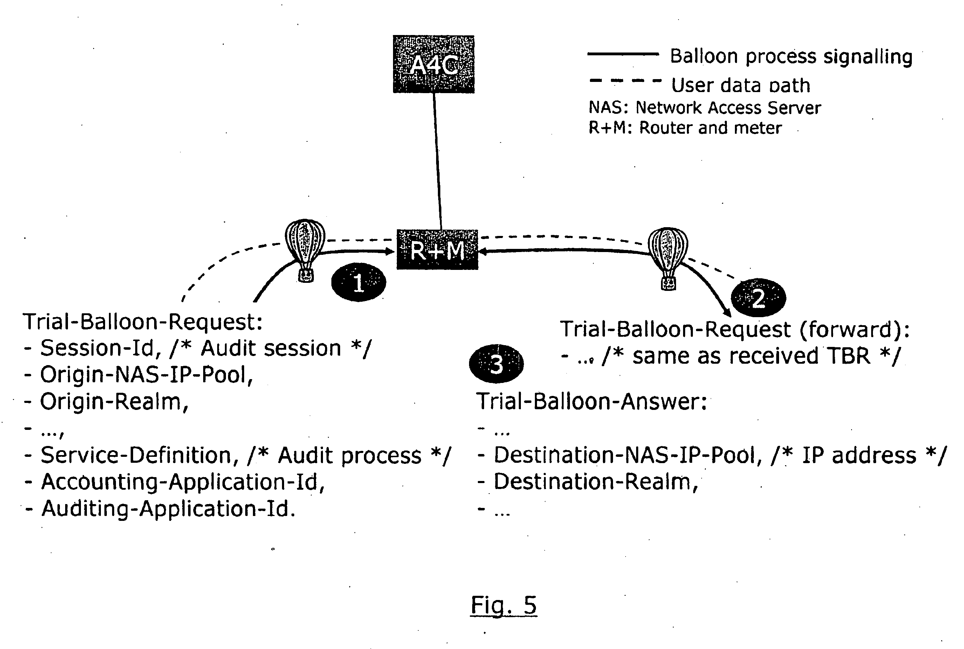

Fig. 5 schematically illustrates the forwarding of a trial-balloon message in a SE shown as router and meter R+M, and it further illustrates the information contained in the trial-balloon message (trial-balloon request TBR). This may in one embodiment include the session ID, the origin NAS IP pool (the pool of addresses for which the managing server of the NAS is responsible), the origin realm or domain, a definition of the service involved in the connection, an accounting application ID and an auditing application ID. So the communication parameters as relevant for the auditing and accounting may be specified together with the session. The TBR is forwarded unchanged by each R+M until it reaches the callee NAS from which a trial-balloon answer is returned which may include the NAS IP pool of the managing server of the NAS of the callee and the destination realm. Using the NAS IP pool a client IP address-based message routing can be performed. Instead of the origin address or the destination address of the managing A4C server of the caller NAS and the callee NAS the client IP address could be transmitted. These information can be transmitted as attribute value pairs (AVP). A message such as the trial balloon request or the trial ballon answer or an inform managing server request may then find its way by looking up the NAS IP pool to identify the NAS to which the client IP address belongs and to forward the message thereto. At the NAS the message may then be forwarded to the responsable managing administration server. This routing based on the client IP address is referred to as client IP address based message routing, a more comprehensive description of which can be found in the patent application titled "Method and Apparatus for hiding Network Topology" filed by the same applicant at the same day as the present application and which is incorporated herein by reference.

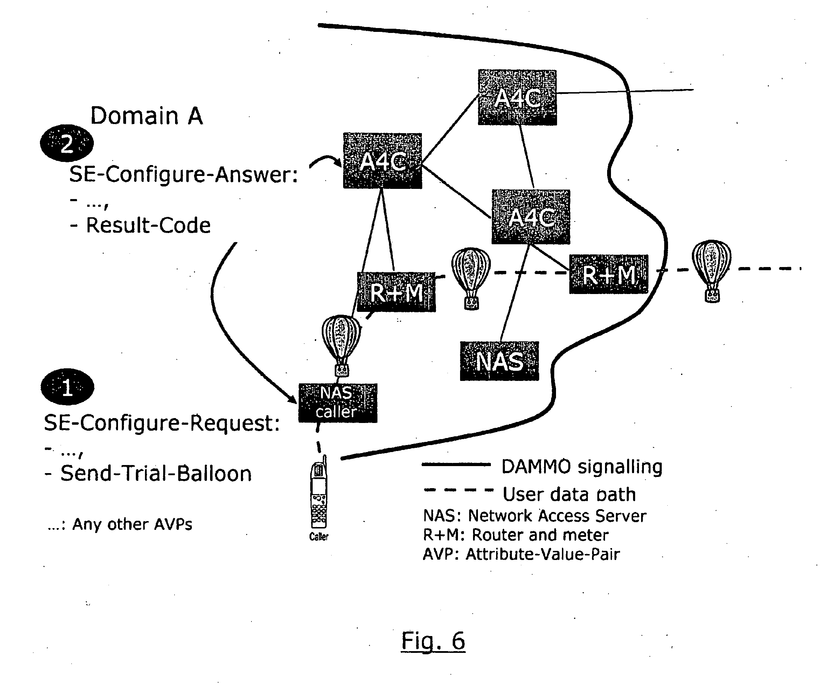

In the following the initiation of the trial-balloon-process according to an embodiment will be described.
The trial-balloon process is started by an A4C server generating an SE-Configure-Request (command (1) in Fig. 6) in which the Send-Trial-Balloon address value pair (AVP) is set. The SE-Configure-Request is sent to the SE where the source mobile device is attached to (i.e. NAS caller). The SE generates a Trial-Balloon-Request and sends it towards the destination mobile device. The SE (i.e. NAS caller) sends back a SE-Configure-Answer (command (2) in Fig. 6) to confirm processing of the request for a trial-balloon or a respective error if the trial-balloon has not been successful.

According to one embodiment messages used in the trial-balloon process are address value pairs which are based on the Diameter protocol which is e.g. described in Calhoun, P.; Loughney, J.; Guttman, E.; Zorn, G. and Arkko, J.,"RFC 3855 - Diameter Base Protocol", 2003, which is a successor of the RADIUS protocol and has been developed for authentication, authorization and accounting. While in the following embodiment the description will sometimes refer to the trial-balloon process being based on the Diameter protocol it will be apparent to the skilled person that the same mechanism may also be based on other protocols.

The Send-Trial-Balloon AVP according to one embodiment is of type Address and holds the IP address of the destination mobile device. The trial-balloon message in an embodiment is put into an UDP packet which is put into an IP packet where the IP address is derived from the Send-Trial-Balloon AVP. The source IP address of the trial-balloon message is the IP address of the source mobile device which is attached to the SE (i.e. NAS caller in Fig. 4).

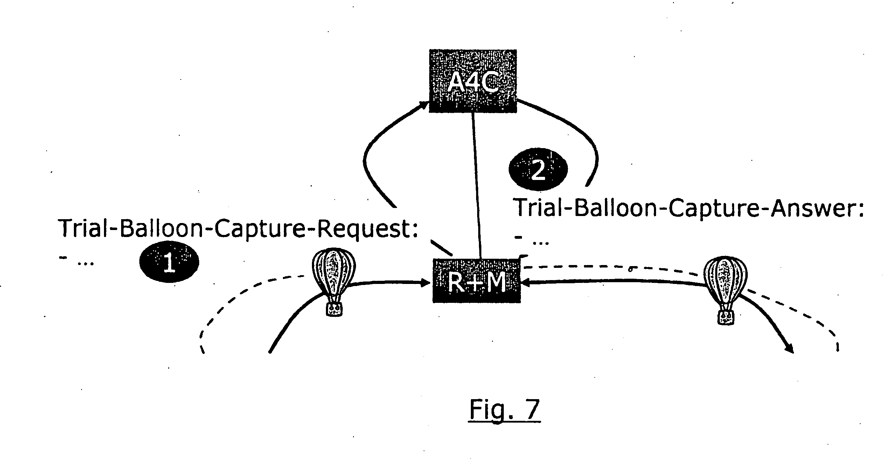

Router and meters (e.g. R+M in Fig. 4) scan all the passing data traffic for trial-balloon messages. If such a message is received and before forwarding this message a local copy is made. The R+M analyses the payload of the copied trial-balloon message and if it can definitely decide (e.g. based on topology data the R+M holds, which, however, may be optional) that no further actions are necessary, it discards the local copy of the packet. However, in all other cases the trial-balloon message is encapsulated in a *Trial-Balloon-Capsule AVP* and included in a *Trial-Balloon-Captured-Request* sent to the A4C server as illustrated in Fig. 7. The encapsulation in an embodiment where the trial-balloon process is based on the Diameter protocol is straightforward since the payload of the trial-balloon message is already Diameter compliant and can simply be taken as content of the Trial-Balloon-Capsule AVP.

The A4C server which receives the Trial-Balloon-Captured-Request analyses the request again and finally decides if to take part in the accounting and auditing process or not. This two-fold decision process according to one embodiment is required since the R+M due to its simple configuration database cannot decide in all cases. So, in one embodiment it can perform only a first-level filtering. The A4C server immediately returns a Trial-Balloon-Captured-Answer to the R+M; thus, the R+M knows that the request is being processed. The A4C server then starts processing the trial-balloon message.

The meter is not required to store any state on the trial-balloon message after the Trial-Balloon-Captured answer was received. It may in one embodiment keep a list of (Origin-NAS-IP-Pool (or origin address), End-To-End Identifier)-tuples to recognize retransmissions. These tuples may be part of the trial-balloon message so that retransmissions may be identified and thus, trial-balloon messages already received and processed are thus ignored. If meters do not implement such an at-most-once semantics, then according to one embodiment at least A4C servers have to support it. According to one embodiment all references to the trial-balloon message may be safely discarded after a period of Retry-Time milliseconds ( which may be defined in a Retry-Time AVP in the initial message) after the initial trial-balloon message has been received.

After an A4C server received a Trial-Balloon-Captured-Request it analyses the Trial-Balloon-Capsule AVP contained in this request and, in particular, the Session-Container AVPs which are according to one embodiment contained therein. They may include information about the session, not only the session ID but information about the requested service and the service level agreement and requirements of the service provisioning, e.g. the required data rate.

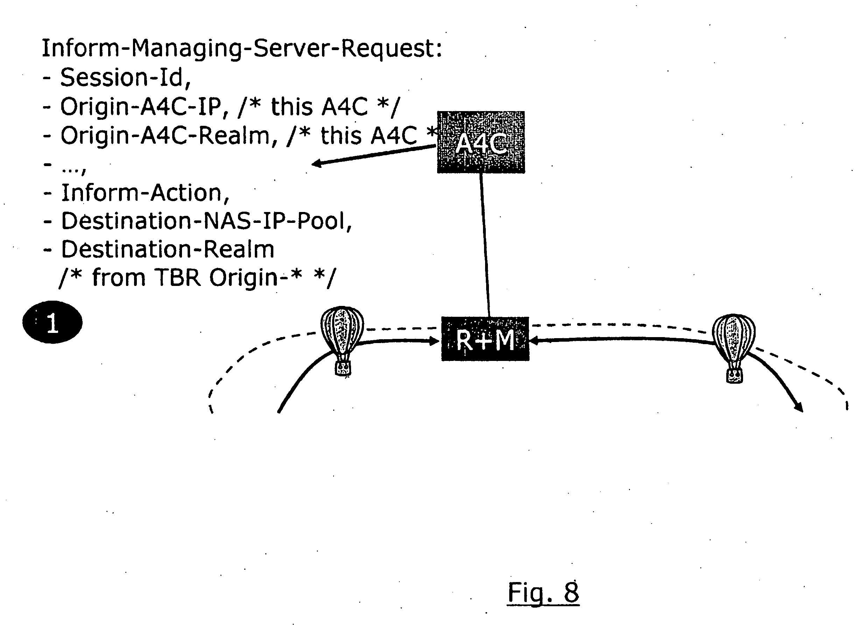

If the A4C server, based on the local configuration (e.g. the capabilities and load of the R+M assigned to it) determines to take part in the auditing process, it generates an *Inform-Managing-Server-Request* which is schematically illustrated in Fig. 8. In Fig. 8 there are also shown information which in the form of AVPs may be included in this command, such as e.g. the session ID, the origin A4C IP (the IP address of the A4C server from which the message originates), the originating realm/domain, information about the action to be taken, the NAS IP pool of the destination (the managing server) or its address if this has been included in the trial-balloon message, and the realm/domain of the destination (the managing server).

The information about the action in Fig. 8 is illustrated as the AVP Inform-Action, where the Inform-Action in case of the joining of the A4C server may e.g. be set to REMOTE-A4C-JOIN. The A4C server sends this request to the managing A4C server to inform the managing server that it will participate in the auditing. Address information is taken from the Origin-NAS-IP-Pool AVP and Origin-Realm AVP included in the Trial-Balloon-Capsule AVP. The message is routed to the managing A4C server which returns an *Inform-Managing-Server-Answer.* The managing A4C server then also sends the required accounting and auditing configuration in the Context-Transfer-Request command if it has not yet already been included in the trial-balloon request. Since the Context-Transfer is a response to an Inform-Managing-Server-Request, the managing A4C server keeps its role of managing all A4C servers taking part in the A4C process and only sends a copy of the configuration data to the remote A4C server.

After receiving the configuration data from the managing A4C server, the remote A4C server issues an SE-Configuration-Request to the R+M which captured the trial-balloon message. The R+M configures itself as requested by the accounting and auditing definitions contained in the SE-Configuration-Request. The R+M returns an SE-Configuration-Answer to the A4C server to acknowledge configuration changes.

According to one embodiment, if an answer to the trial-balloon message is not returned to the sender within a timeout period of t_{Trial-Balloon-Timeout} milliseconds, the SE retransmits the trial-balloon message. A retry-count n_{retry-Trial-Balloons} is defined so that the SE retransmits the trial-balloon message only a finite number of times. If retry-count messages have not been answered, the SE returns an error to the A4C server.

For security reasons according to one embodiment the following issues may be considered:
o The message must not reveal network internals;
o Users may attack the network by generating and sending trial-balloon messages.

The first bullet may be addressed by an embodiment where the sending SE (i.e. NAS caller) does not use its own IP addresses but the address of the mobile terminal of the attached user who initiated the to-be-audited sessions.

Since the IP addresses of the attached mobile terminal are used, it should be ensured that users cannot misuse the trial-balloon process by generating these messages on their own. Such a kind of attack may according to one embodiment be circumvented by labeling all trial-balloon messages with an IPv6 extension header. A description of IPv6 can be found in Deering, S. and Hinden R., "RFC 2460 - Internet Protocol, Version 6 (IPv6)", 1998.

For that purpose a mechanism can be used which is described in Partridge, C and Jackson, A., "RFC 2711 - IPv6 Router Alert Option", October 1999 and which defines a means to alert transit routers to examine the contents of an IP datagram. The IPv6 packet header is quite simple and provides only the absolutely necessary fields for packet forwarding. This enables efficient processing of packets in routers. Additional information, e.g., encryption, authentication, source routing or the headers of higher protocols (i.e., TCP, UDP and ICMP) are stored in so-called extension headers, which are referenced by the elementary IPv6 packet header. Transit routers only have to process one of these extension headers: the Hop-by-hop Options header. It consists of a variable number of type-length-value encoded options. The options describe which packet is handled on every router. RFC 2711 now defines such an option type for the Hop-by-hop Options header which provides an efficient mechanism to have routers intercept a datagram not addressed to them without having to extensively examine every datagram. Option type 00000101₂ requires a two octet value, which denotes the type of the datagram's payload. The numbers in this value field are maintained by IANA.

The trial-balloon message utilizes this mechanism to alert transit routers to examine the packet. Every packet containing a trial-balloon message is required to have a Hop-by-hop Options header with an option type of 00000101₂ and a value denoting the trial-balloon message. This value's number according to one embodiment has to be requested and assigned by IANA (Internet Assigned Numbers Authority IANA, see www.iana.org). Each NAS is responsible to block packets from mobile terminals which include an IPv6 Hop-by-hop Options header with the option type 00000101₂ and return an ICMP Parameter Problem, Code 2, message to the packet's source address. As a network operator anyhow filters this header to protect its network, the Hop-by-hop Option does not mean an additional processing overhead.

In the following there will be described in somewhat more detail an embodiment where the commands being used in support of the trial-balloon process are based on the Diameter protocol. In the following, the commands and AVPs are summarized that are being used in the trial-balloon process. Here in the following there will be described mainly those commands and AVPs which are not already described in the diameter specification but which are specific for implementing the trial-balloon mechanism.
To describe the commands and AVPs there will be used the ABNF grammar as required in RFC 3855 for all extensions to the Diameter protocol. For a description of ABNF one could e.g. refer to Crocker, D. and P. Overell, "Augmented BNF for Syntax Specifications: ABNF", RFC 2234, November 1997, and section 3.2. of RFC 3855. In accordance with Diameter each command consists of a Request and a corresponding answer message.

According to one embodiment each command and AVP will be assigned unique command respective AVP codes which are maintained by IANA. In the following description of the commands and AVPS the codes are denoted as TBD (to be determined) as they are not yet assigned.

### SE-Configure-Request/-Answer

The SE-Configure-Request and -Answer pair is a newly defined command. The command is sent by an A4C server to its associated SE (e.g., NAS caller in above figures). The SE-Configure-Request command is sent by the A4C server to instruct an SE to collect information required for accounting and auditing.

For one embodiment the AVP of importance is the Send-Trial-Balloon AVP which is embedded in the SE-Configuration-Container AVP which includes the Configuration-Definition AVP which includes the Definition-Parameter AVP which, ultimately, includes the Send-Trial-Balloon AVP; a detailed definition of these AVPs will follow.

SE-Configure-Request (SCR) command format is as follows:

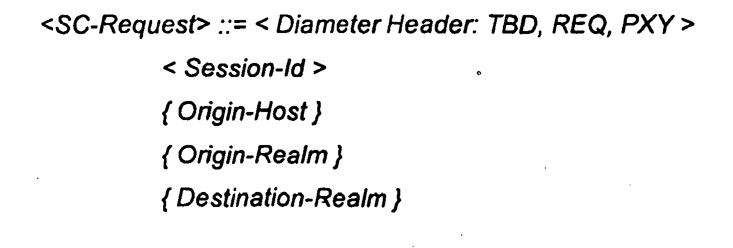

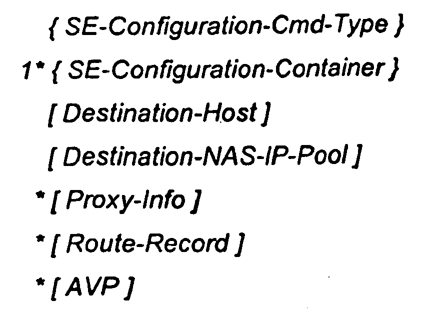

SE-Configure-Answer (SCA) command format is defined as follows:

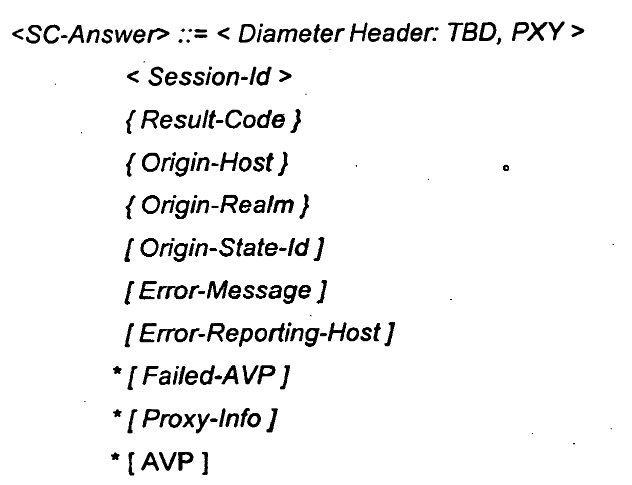

### Inform-Managing-Server-Request/-Answer

The Inform-Managing-Server-Request command is sent by an A4C server discovered by the trial-balloon process. The command is used to inform the managing A4C server that another A4C server is participating in the accounting or auditing process.

Inform-Managing-Server-Request (IMR) command format is as follows:

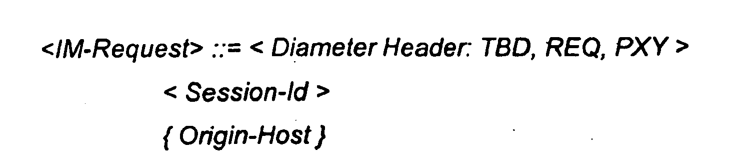

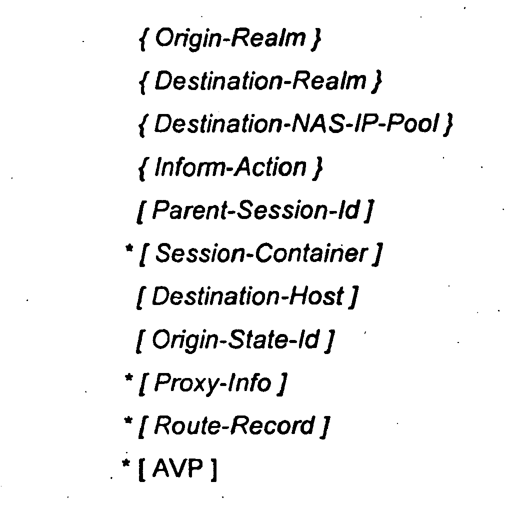

Inform-Managing-Server-Answer (IMA) command format is defined:

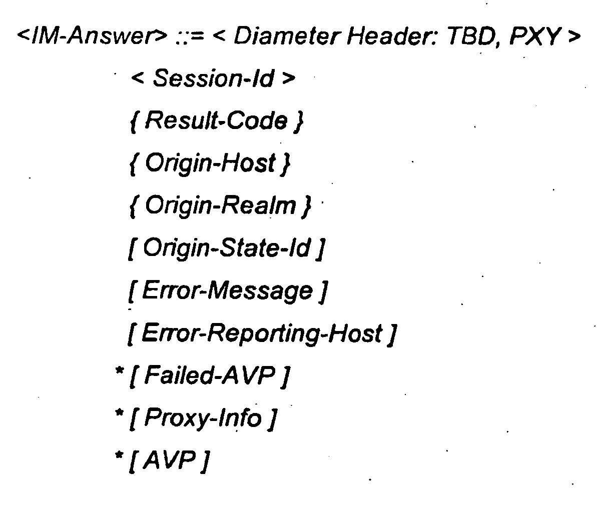

### Context-Transfer-Request/-Answer

The Context-Transfer-Request command is sent by the managing A4C server to the A4C server which has to be configured after discovery by the trial-balloon mechanism. The commands are used to send the required accounting and auditing data to the new A4C server.

Context-Transfer-Request (CTR) command format is as follows:

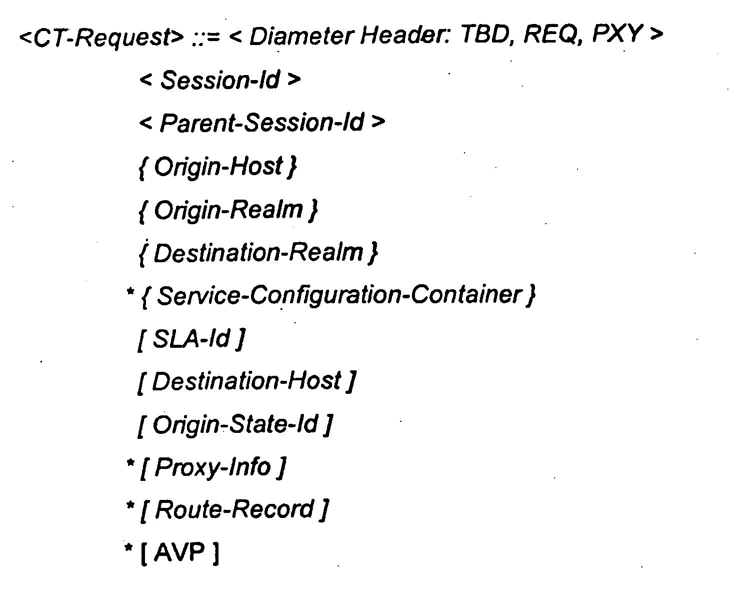

Context-Transfer-Answer (CTA) command is a confirmation back to the A4C server which sent the Request and the command format is as follows:

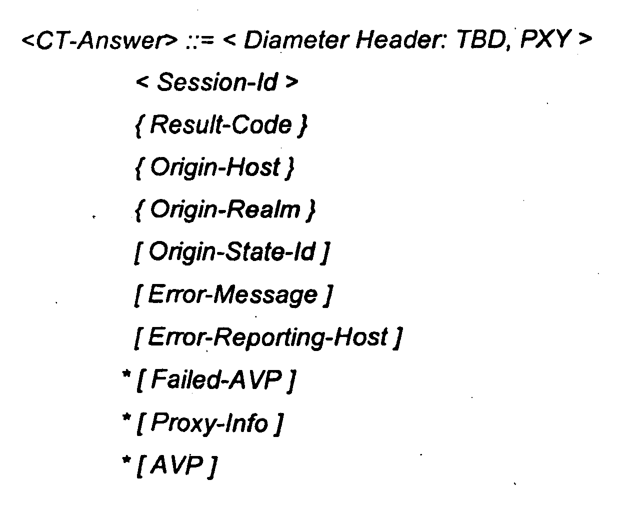

### Trial-Balloon-Request/-Answer

The Trial-Balloon-Request (TBR) and Trial-Balloon-Answer (TBA) commands have already been described before. The Trial-Balloon-Request command is generated by a NAS on request of an A4C server and sent by UDP towards the IP address of the mobile terminal at the other end of a connection. It contains the session ID of the accounting and auditing sessions which have to be started. The command does not need to contain the actual address of the sending NAS. In order not to disclose the internal network structure, as addressee the IP-address of the mobile terminal can be included in the Origin-NAS-IP-Pool AVP. For security reasons discussed before already, the sending NAS may use the IP address of the mobile terminal as the source IP of the command.
The Origin-Realm is set to the name of the realm generating this message. Together with the Origin-NAS-IP-Pool AVP it forms the address for an answer to find its way back. This is a pool of IP addresses for which the NAS is responsible.

Alternatively the TBR may directly include the IP address of the NAS, or, in another embodiment, additionally or alternatively the IP address of the managing A4C server which is responsible for the NAS.

The Retry-Time AVP contains the product Of t_{Trial-Balloon-Timeout} and n_{retry-Trial-Balloons}. The AVP gives the meters and A4C servers a hint, how long retransmissions have to be expected in the worst case and what is the earliest point of time when they can flush all information about this trial-balloon message out of the caches.

The Acct-Application-Id, Audit-Application-Id and Vendor-Specific-Application-Id AVPs (encapsulated in the Session-Container grouped AVP) contain the identifiers of the applications necessary to interpret this request. If a meter does not support all applications it still may forward the request to its A4C server, as the A4C server may support the applications.

The AVPs of the TBA are defined analogous to the ones of the TBR.

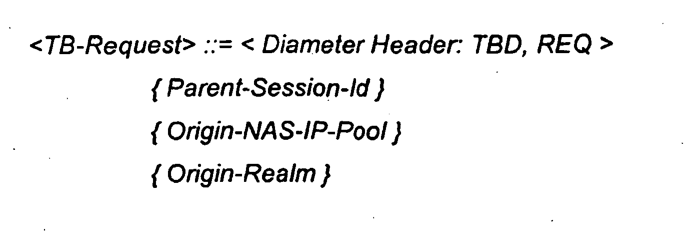

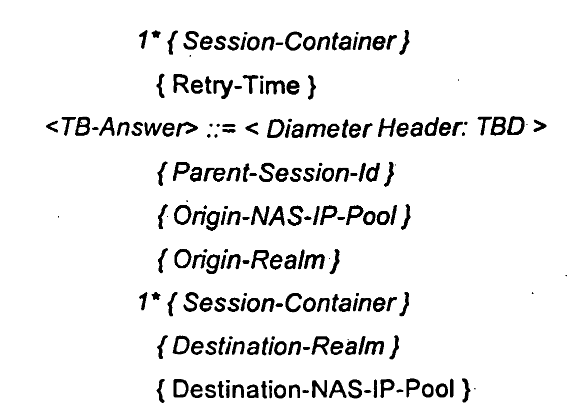

### Trial-Balloon-Capture-Request/-Answer

The Trial-Balloon-Captured-Request command is sent by an SE to the A4C server responsible for this SE to notify the server about the reception of a trial-balloon message. The Trial-Balloon-Capsule AVP contains the trial-balloon message.

The Trial-Balloon-Captured-Request (TCR) command format is as follows:

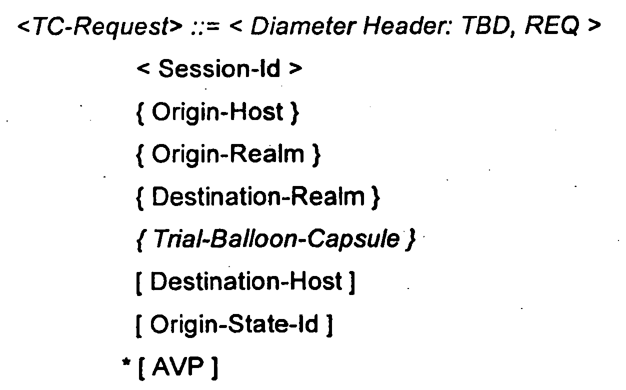

Trial-Balloon-Captured-Answer (TCA) is sent from the A4C server back to the originating SE. The command format is defined as follows:

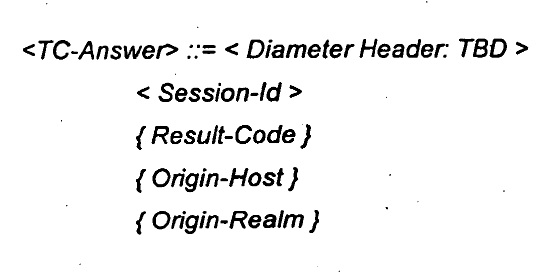

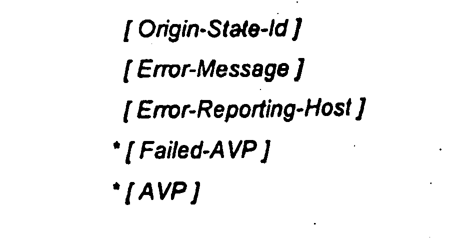

The above introduced commands are built from attribute-value-pairs (AVP) which are defined in RFC 3855; those AVPs which are specific to an embodiment of the trial-balloon process are discussed below. The AVPs are given in alphabetical order

### Audit-Application-Id AVP

The Audit-Application-Id AVP is of type Unsigned32 and is used in order to advertise support of the auditing portion of an application. The Audit-Application-Id is present in all auditing messages. It is defined analogous to the Acct-Application-Id AVP.

### Configuration-Definition

The Configuration-Definition AVP is of type grouped and contains detailed information, how accounting and auditing shall be performed. The definition consists of an Id, a type and parameters. The Definition-Type AVP specifies whether the configuration is for accounting or for auditing. The Definition-Parameter AVP defines the accounting- and auditing-specific configuration data. Additionally, the Acct-Application-Id AVP, Audit-Application-Id AVP and Vendor-Specific-Application-Id AVP specify the application required to interpret the definition.

```
 <Configuration-Definition> ::= < AVP Header: TBD >
          { Definition-Id }
         { Definition-Type }
         { Definition-Parameter }
         [ Acct-Application-Id ]           [ Audit-Application-Id ]
         [ Vendor-Specific-Application-Id ]
```

### Definition-Parameter AVP

The Definition-Parameter AVP is of type grouped and contains the accounting- and auditing-specific configuration data. The following list contains some examples for definition parameters:

```
   [ Send-Trial-Balloon ]
   [ Audit-Realtime-Required ]
   [ Audit-Interim-Interval ]
   [ Accounting-Realtime-Required ]
   [ Acct-Interim-Interval ]
   [ Acct-Session-Time ]
   [ Accounting-Input-Octets ]
   [ Accounting-Input-Packets ]
   [ Accounting-Output-Octets ]
   [ Accounting-Output-Packets ]
```

### Inform-Action AVP

The Inform-Action AVP is of type enumerated and contains the action, which the managing A4C server should perform on reception of the Inform-Managing-A4C-Request.
o TRANSFER-COMPLETE-CONTEXT: The A4C server should send the complete mobile terminal's context, remove the configurations from all SEs and release the context locally.
o REMOTE-A4C-JOIN: A remote A4C server wants to join the accounting and auditing process. The managing A4C server should send the respective parts of the SLA and add the sending server to the list of remote A4C server.

### Origin-NAS-IP-Pool AVP

The Origin-NAS-IP-Pool AVP is of type Address. A Diameter peer can include this AVP as the sender's address, if it does not want to name its own address)

### SE-Configuration-Container AVP

The SE-Configuration-Container AVP is of type grouped and contains all configuration information required to setup accounting and auditing in a SE. The AVP is included in the SE-Configure-Request command sent to a SE. The container defines the configuration for one session specified by the Session-Id and Parent-Session-Id AVPs. Consequently, the SE-configuration-Request command can contain the SE-Configuration-Container AVP several times. The Service-Id AVP allows the SE to map the configuration data to a service requested by the user. This can make the accounting and auditing configuration easier in SEs which contain besides service provisioning a joint metering function. In this case the specification of the IP flow can become obsolete. The Configuration-Definition AVP contains the accounting- and auditing-specific configuration data. The Flow-Filter AVP specifies the IP flow which shall be monitored for accounting and auditing. The Idle-Timeout AVP sets the maximum number of consecutive seconds of idle connection allowed to the user before the termination of the session.

```
 <SE-Configuration-Container> ::= < AVP Header: TBD >
                    < Session-Id >
                    < Parent-Session-Id >
                    [ Service-Id ]
                   * [ Configuration-Definition ]
                   * [ Flow-Filter ]
                    [ Idle-Timeout ]
```

### Send-Trial-Balloon

The Send-Trial-Balloon is of type Address. If this AVP is included in an SE-Configure-Request the receiving Diameter client is requested to send a trial-balloon message towards the given address.

### Session-Container AVP

The Session-Container AVP is of type grouped and contains the description of a running session with the Session-Id, the Parent-Session-Id and the Service-Id AVPs. The Acct-Application-Id, the Audit-Application-Id and the Vendor-Specific-Application-Id AVPs specify the Diameter applications required to support the given session.

```
 <Session-Container> ::= < AVP Header: TBD >
             [ Acct-Application-Id ]
             [ Audit-Application-Id ]
             [ Vendor-Specific-Application-Id ]
             [ Parent-Session-Id ]
             [ Session-Id ]
             [ Service-Id ]
```

### Trial-Balloon-Capsule AVP

The Trial-Balloon-Capsule AVP is of type grouped and encapsulates the Trial-Balloon message. The Parent-Session-Id AVP contains the root session identifier SID of the session.

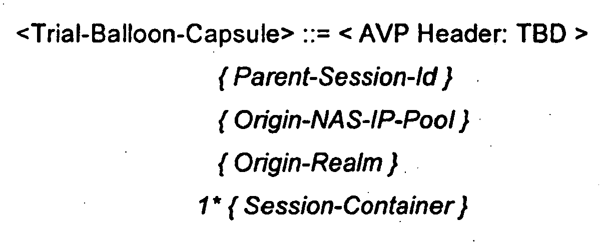

### Vendor-Specific-Application-Id AVP

The Vendor-Specific-Application-Id AVP is of type grouped and is used to advertise support of a vendor-specific Diameter Application. It is extended by the Audit-Application-Id AVP:

```
 <Vendor-Specific-Application-Id> ::= < AVP Header: TBD >
                     1*[ Vendor-Id ]
                     0*1{ Auth-Application-Id }                      0*1{ Acct-Application-Id }
```

The invention has in the foregoing been described by means of exemplary embodiments. The skilled person will understand that modifications may be made to these embodiments without departing from the scope of the invention.

E.g., one may have asymmetric data paths; i.e. packets are routed differently from source to destination and destination to source. Thus, the trial-balloon process has to be done for the backwards path as well. The procedure is the same but to be initiated by the administration server close to the network access server of the attachment point of the destination.

Moreover, while in the embodiments described hereinbefore each message takes the form of a request/answer, the answer being sent for confirming that the request was received. Other messaging schemes where no confirmation response is required may be applied as well.

The skilled person will understand that the embodiments may be implemented by computer hardware, by computer software or a combination of both of them. In particular, elements or modules performing certain functions as described in the foregoing embodiments may be implemented through computers which are suitably programmed or through software modules.

## Claims

1. A method for configuring a plurality of service equipment elements located along a data path connecting two elements in a network, said network comprising a plurality of administration servers, each administration server being responsible for configuring a respectively different plurality of service equipment elements, said method comprising:
sending a trial-balloon message along said data path, said trial-balloon message when being received by a service equipment element in said data path causing said service equipment element to contact its corresponding administration server and said trial-balloon message further being forwarded by said service equipment element by which it was received to the next service equipment element in said data path;
said administration servers in response to being contacted by their respective service equipment elements configuring said service equipment elements in accordance with context information received by said administration servers.

2. The method of claim 1, wherein
said service equipment elements have a metering functionality and said configuration of said service equipment elements by said administration servers comprises to configure them in order to enable them to perform a metering which is used to monitor the service quality along said data path as to whether it is in compliance with a service level agreement.

3. The method of claim 1 or 2, further comprising:
forwarding said trial-balloon message by said service equipment elements to their respective administration servers;
if one of said administration servers decides to participate in an auditing and/or accounting process, forwarding by said administration server an inform-managing-administration-server message to the managing administration server being the server which is responsible for the network attachment server where the caller is attached to said network;
in response to said inform-managing-administration-server message, sending by said managing administration server a context transfer message to transfer context information to said administration server to enable said administration server to configure said service equipment in accordance with auditing and/or accounting requirements indicated by said context information.

4. The method of one of the preceding claims, wherein
if an answer to the trial-balloon message is not returned to the sender within a timeout period, the trial-balloon message is retransmitted.

5. The method of one of the preceding claims, wherein
each trial-balloon message contains a hop-by-hop options header identifying the trial-balloon message, wherein each network access server blocks messages having this hop-by-hop options header if the messages come from a mobile terminal.

6. The method of one of the preceding claims, wherein
the service equipment elements which are configured participate in the auditing and/or accounting of a session running between a caller and a destination or a callee;
the trial-balloon message is dispatched by the network access server to which the caller is attached and the trial-balloon message containing the session ID of the auditing and/or accounting sessions in which the service equipment elements should participate.

7. The method of claim 6, wherein
the dispatching of the trial-balloon message is performed in response to a send trial-balloon triggering message forwarded from the managing administration server of the network access server to which the caller is attached to the said network access server.

8. The method of one of the preceding claims, wherein
the trial-balloon message is generated by the network access server when a user on his/her mobile terminal requests a service and/or sets up a connection to another user.

9. An apparatus for configuring a plurality of service equipment elements located along a data path connecting two elements in a network, said network comprising a plurality of administration servers, each administration server being responsible for configuring a respectively different plurality of service equipment elements, said apparatus comprising:
a sending unit for sending a trial-balloon message along said data path, said trial-balloon message when being received by a service equipment element in said data path causing said service equipment element to contact its corresponding administration server and said trial-balloon message further being forwarded by said service equipment element by which it was received to the next service equipment element in said data path;
said administration servers being adapted to in response to being contacted by their respective service equipment elements configure said service equipment elements in accordance with context information received by said administration servers.

10. A service equipment element located along a data path connecting two elements in a network, said network comprising a plurality of administration servers, each administration server being responsible for configuring a respectively different plurality of service equipment elements, said service equipment element comprising:
a receiving unit for receiving a trial-balloon message;
a sending unit for forwarding said trial-balloon message by said service equipment element to the next service equipment element in said data path,
said service equipment element being adapted to contact its corresponding administration server in response to reception of said trial-ballon;
said service equipment element further being adapted to be configured by said administration server in response to said administration server being contacted by said service equipment element to configure said service equipment element in accordance with context information received by said administration server.

11. An administration server located in a network comprising a plurality of service equipment elements located along a data path connecting two elements in said network, said administration server being responsible for configuring one or more service equipment elements, said administration server comprising:
a receiving unit for receiving a contacting message from one or more of said service equipment elements in response to said service equipment element having received a trial-balloon message, said trial-balloon message when being received by a service equipment element in said data path causing said service equipment element to contact its corresponding administration server by said contacting message and said trial-balloon message further being forwarded by said service equipment element by which it was received to the next service equipment element in said data path;
a configuration unit being adapted to configure in response to said receiving unit being contacted by said contacting message by said respective service equipment element said service equipment element in accordance with context information received by said administration server.

12. The apparatus of claim 9, wherein
said service equipment elements have a metering functionality and said configuration of said service equipment elements by said administration servers comprises to configure them in order to enable them to perform a metering which is used to monitor the service quality along said data path as to whether it is in compliance with a service level agreement.

13. The administration server of claim 11, further comprising:
trial-balloon means for if said administration server decides to participate in an auditing and/or accounting process, forwarding by said administration server an inform-managing-administration-server message to the managing administration server being the server which is responsible for the network attachment server where the caller is attached to said network;
means for receiving in response to said inform-managing-administration-server message from said managing server context information by said administration server to enable said administration server to configure said service equipment in accordance with auditing and/or accounting requirements indicated by said context information.

14. The apparatus of claim 9, further comprising one or more of the following:
means for forwarding said trial-balloon message by said service equipment element to its respective administration servers;
means for retransmitting said trial-balloon message if an answer to the trial-balloon message is not returned to the sender within a timeout period,.

15. The apparatus of one of claims 9 to 14, wherein
each trial-balloon message contains a hop-by-hop options header identifying the trial-balloon message, wherein each network access server blocks messages having this hop-by-hop options header if the messages came from a mobile terminal.

16. The apparatus of one of claims 9 to 15, wherein
the service equipment elements which are being configured participate in the auditing and/or accounting of a session running between a caller and a destination or a callee;
the trial-balloon message is dispatched by the network access server to which the caller is attached and the trial-balloon message containing the session ID of the auditing and/or accounting sessions in which the service equipment elements should participate.

17. The apparatus of claim 16, wherein
the dispatching of the trial-balloon message is performed in response to a send trial-balloon command forwarded from the managing server of the network access server to which the caller is attached to the said network access server.

18. A computer program comprising computer executable code which when being executed on a computer causes said computer to carry out a method according to one of claims 1 to 8.

## Patentansprüche

1. Verfahren zum Konfigurieren einer Mehrzahl von Service-Equipment-Elementen, die entlang eines Datenpfads angeordnet sind, der zwei Elemente in einem Netzwerk verbindet, wobei das Netzwerk eine Mehrzahl von Administrationsservern umfasst, wobei jeder Administrationsserver für die Konfiguration einer jeweils unterschiedlichen Mehrzahl von Service-Equipment-Elementen verantwortlich ist, wobei das Verfahren aufweist:
Senden einer Test-Ballon-Nachricht entlang des Datenpfads, wobei die Test-Ballon-Nachricht dann, wenn sie durch ein Service-Equipment-Element in dem Datenpfad empfangen wird, das Service-Equipment-Element veranlasst, seinen entsprechenden Administrationsserver zu kontaktieren und die Test-Ballon-Nachricht ferner durch das Service-Equipment-Element, von dem sie empfangen wurde, an das nächste Service-Equipment-Element in dem Datenpfad weitergeleitet wird;
die Administrationsserver konfigurieren in Reaktion darauf, dass sie durch ihre jeweiligen Service-Equipment-Elemente kontaktiert werden, die Service-Equipment-Elemente in Übereinstimmung mit Kontextinformationen, die durch die Administrationsserver empfangen wurde.

2. Verfahren nach Anspruch 1, wobei
die Service-Equipment-Elemente eine Mess-Funktionalität aufweisen und die Konfiguration der Service-Equipment-Elemente durch die Administrationsserver umfasst, dass sie konfiguriert werden, um sie in die Lage zu versetzen, eine Messung durchzuführen, die verwendet wird, um die Servicequalität entlang des Datenpfads zu überwachen, und zwar dahingehend, ob sie sich in Übereinstimmung mit einer Serviceniveau-Vereinbarung befindet.

3. Verfahren nach Anspruch 1 oder 2, ferner aufweisend:
Weiterleiten der Test-Ballon-Nachricht durch die Service-Equipment-Elemente zu ihren jeweiligen Adminstrationsservern;
falls einer der Admistrationsserver entscheidet, in einem Prüfungs-und/oder Buchungsprozess teilzunehmen, Weiterleiten einen "Informiere-Managing-Adminstrationsserver-Nachricht" an den Managing-Adminstrationsserver, der derjenige Server ist, der für den Netzwerk-Anschlussserver verantwortlich ist, an dem der Anrufer an das Netzwerk angeschlossen ist;
in Reaktion auf die Informiere-Managing-Administrationsserver-Nachricht, Senden einer Kontext-Übertragungs-Nachricht durch den Managing-Administrationsserver, um Kontextinformationen an den Administrationsserver zu übertragen, um den Adminstrationsserver in die Lage zu versetzen, das Service-Equipment in Übereinstimmung mit Prüfungs- und/oder Buchungsanforderungen zu konfigurieren, die durch die Kontextinformationen angegeben werden.

4. Verfahren nach einem der vorherigen Ansprüche, wobei
falls eine Antwort auf die Test-Ballon-Nachricht nicht an den Sender innerhalb einer Timeout-Periode zurückgesendet wird, die Test-Ballon-Nachricht erneut übertragen wird.

5. Verfahren nach einem der vorhergehenden Ansprüche, wobei
jede Test-Ballon-Nachricht einen Station-nach-Stations-Optionen-Header enthält, der die Test-Ballon-Nachricht identifiziert, wobei jeder Netzwerk-Zugriffs-Server Nachrichten blockiert, die diesen Station-nach-Stations-Optionen-Header aufweisen, falls die Nachricht von einem mobilen Terminal kommt.

6. Verfahren nach einem der vorhergehenden Ansprüche, wobei
die Service-Equipment-Elemente, die konfiguriert sind, an der Prüfung und/oder Buchung einer Session teilnehmen, die zwischen einem Anrufer und einem Ziel oder einem Angerufen läuft;
die Test-Ballon-Nachricht durch den Netzwerk-Zugriffs-Server an den der Anrufer angeschlossen ist abgesandt wird, und die Test-Ballon-Nachricht die Session-ID der Prüfungs- und/oder Buchungs-Sessions enthält, an denen die Service-Equipment-Elemente teilnehmen sollen.

7. Verfahren nach Anspruch 6, wobei
das Absenden der Test-Ballon-Nachricht in Reaktion auf das Senden einer Test-Ballon-Trigger-Nachricht durchgeführt wird, die von dem Managing-Administrations-Server des Netzwerk-Zugriff-Servers weitergeleitet wurde, an dem der Anrufer an den Netzwerk-Zugriff-Server angeschlossen ist.

8. Verfahren nach einem der vorhergehenden Ansprüche, wobei
die Test-Ballon-Nachricht durch den Netzwerk-Zugriff-Server erzeugt wird, wenn ein Nutzer auf seinem/ihrem mobilen Terminal einen Service anfordert und/oder eine Verbindung zu einem anderen Benutzer aufbaut.

9. Vorrichtung zum Konfigurieren einer Mehrzahl von Service-Equipment-Elementen, die entlang eines Datenpfads angeordnet sind, der zwei Elemente in einem Netzwerk verbindet, wobei das Netzwerk eine Mehrzahl von Administrationsservern aufweist, wobei jeder Administrationsserver für die Konfiguration einer jeweils unterschiedlichen Anzahl von Service-Equipment-Elementen verantwortlich ist, wobei die Vorrichtung aufweist:
eine Sendeeinheit zum Senden einer Test-Ballon-Nachricht entlang des Datenpfads, wobei die Test-Ballon-Nachricht dann, wenn sie durch ein Service-Equipment-Element in dem Datenpfad empfangen wird, das Service-Equipment-Element veranlasst, seinen entsprechenden Administrationsserver zu kontaktieren, und die Test-Ballon-Nachricht ferner durch das Service-Equipment-Element weitergeleitet wird, durch das sie empfangen wurde, und zwar an das nächste Service-Equipment-Element in dem Datenpfad;
die Administrationsserver sind angepasst, um in Reaktion darauf, dass sie durch ihre jeweiligen Service-Equipment-Elemente kontaktiert werden, die Service-Equipment-Elemente in Übereinstimmung mit Kontextinformationen konfigurieren, die durch die Administrationsserver empfangen wurden.

10. Ein Service-Equipment-Element, dass Entlang eines Datenpfads angeordnet ist, der zwei Elemente in einem Netwerk verbindet, wobei das Netzwerk eine Mehrzahl von Administrationsservern aufweist, wobei jeder Administrationsserver verantwortlich ist für die Konfiguration einer jeweils unterschiedlichen Mehrzahl von Service-Equipment-Elementen, wobei das Service-Equiment-Element aufweist:
eine Empfangseinheit zum Empfangen einer Test-Ballon-Nachricht;
eine Sendeeinheit zum Weiterleiten der Test-Ballon-Nachricht durch das Service-Equipment-Element an das nächste Service-Equipment-Element in dem Datenpfad;
wobei das Service-Equipment-Element angepasst ist, um in Reaktion auf den Empfang der Test-Ballon-Nachricht seinen entsprechenden Administrationsserver zu kontaktieren;
wobei das Service-Equipment-Element ferner angepasst ist, um durch den Administrationsserver konfiguriert zu werden in Reaktion darauf, dass der Administrationsserver durch das Service-Equipment- Element kontaktiert wurde, um das Service-Equipment-Element in Übereinstimmung mit Kontextinformationen zu konfigurieren, die durch den Adminstrationsserver empfangen wurden.

11. Administrationsserver, der in einem Netzwerk angeordnet ist, welches eine Mehrzahl von Service-Equipment-Elementen aufweist, die entlang eines Datenpfads angeordnet sind, der zwei Elemente in dem Netzwerk verbindet, wobei der Administrationsserver verantwortlich dafür ist, einen oder mehrere Service-Equipment-Elemente zu konfigurieren, wobei der Administrationsserver aufweist:
eine Empfangseinheit zum Empfangen einer Kontaktierungsnachricht von einem oder mehreren der Service-Equipment-Elemente in Reaktion darauf, dass das Service-Equipment-Element eine Test-Ballon-Nachricht empfangen hat, wobei die Test-Ballon-Nachricht dann, wenn sie durch ein Service-Equipment-Element in dem Datenpfad empfangen wird, das Sevice-Equipment-Element veranlasst, seinen entsprechenden Administrationsserver durch die Kontaktierungsnachricht zu kontaktieren und die Test-Ballon-Nachricht ferner durch das Service-Equipment-Element weitergeleitet wird, durch das sie empfangen wurde, und zwar an das nächste Service-Equipment-Element in dem Datenpfad;
eine Konfigurationseinheit, die angepasst ist, um in Reaktion darauf, dass die Empfangseinheit durch die Kontaktierungsnachricht durch das jeweilige Service-Equipment-Element kontaktiert wurde, das Service-Equipment-Element in Übereinstimmung mit Kontextinformationen zu konfigurieren, die durch den Administrationsserver empfangen wurden.

12. Verfahren nach Anspruch 9, wobei
die Service-Equipment-Elemente eine Mess-Funktionalität aufweisen und die Konfiguration der Service-Equipment-Elemente durch die Administrationsserver umfasst: ihre Konfiguration, um sie in die Lage zu versetzen, eine Messung durchzuführen die verwendet wird, um die Servicequalität entlang des Datenpfads dahingehend zu überwachen, ob sie in Übereinstimmung mit einer Serviceniveau-Vereinbarung ist.

13. Administrationsserver nach Anspruch 11, ferner aufweisend:
eine Test-Ballon-Einrichtung um, falls der Administrationsserver entscheidet, in einem Prüfungs- und/oder Buchungsprozess teilzunehmen durch den Administrationsserver eine Informiere-Managing-Administrationsserver-Nachricht an den Managing-Administrationsserver weiterzuleiten, der derjenige Server ist, welche verantwortlich ist für den Netzwerk-Zugriffsserver, an den der Anrufer an das Netzwerk angeschlossen ist;
eine Einrichtung zum Empfangen von Kontextinformationen von dem Managing-Server in Reaktion auf die Informiere-Managing-Administrationsserver-Nachricht durch den Administrationsserver, um den Administrationsserver in die Lage zu versetzen, das Service-Equipment in Übereinstimmung mit Prüfungs-und/oder Buchungsanforderungen, die durch die Kontextinformationen angegeben werden, zu konfigurieren.

14. Vorrichtung nach Anspruch 9, ferner aufweisend eines oder mehrere von Folgendem;
eine Einrichtung zum Weiterleiten der Test-Ballon-Nachricht durch das Service-Equipment-Element an seine jeweiligen Administrationsserver;
eine Einrichtung zum erneuten Übersenden der Test-Ballon-Nachricht, falls eine Antwort auf die Test-Ballon-Nachricht nicht an den Sender innerhalb einer Timeout-Periode zurückgesandt wird.

15. Verfahren nach einem der Ansprüche 9 bis 14, wobei
jede Test-Ballon-Nachricht einen Stations-nach-Stations-Optionen-Header enthält, der die Test-Ballon-Nachricht identifiziert, wobei jeder Netzwerk-Zugriffsserver Nachrichten blockiert, die diesen Stations-nach-Stations-Optionen-Header aufweisen, falls die Nachrichten von einem mobilen Terminal kommen.

16. Verfahren nach einem der Ansprüche 9 bis 15, wobei
die Service-Equipment-Elemente, die konfiguriert sind, um der Prüfung und/oder der Buchung einer Session teilzunehmen, die zwischen einem Anrufer und einem Ziel oder einem Angerufenen läuft;
die Test-Ballon-Nachricht durch den Netzwerk-Zugriffserver abgesandt wird, an den der Anrufer angeschlossen ist und die Test-Ballon-Nachricht die Session-Idee der Prüfungs- und/oder Buchungs-Sessions enthält, an denen die Service-Equipment-Elemente teilnehmen sollten.

17. Vorrichtung nach Anspruch 16, wobei
das Absenden der Test-Ballon-Nachricht in Reaktion auf das Senden eines Test-Ballon-Befehls durchgeführt wird, der von dem Managingserver des Netzwerk-Zugriffsservers weitergeleitet wird, an den der Anrufer an den Netzwerk-Zugriffsserver angeschlossen ist.

18. Computerprogramm, welches computerausführbaren Kode aufweist, der wenn er auf einem Computer ausgeführt wird, den Computer veranlasst, ein Verfahren gemäß einem der Ansprüche 1 bis 8 auszuführen.

## Revendications

1. Procédé pour configurer une pluralité d'éléments d'équipement de service localisés le long d'un chemin de données connectant deux éléments au sein d'un réseau, ledit réseau comportant une pluralité de serveurs d'administration, chaque serveur d'administration ayant pour fonction de configurer une pluralité respectivement différente d'éléments d'équipement de service, ledit procédé comportant les étapes consistant à :
transmettre un message de ballon d'essai le long dudit chemin de données, ledit message de ballon d'essai, lorsqu'il est reçu par un élément d'équipement de service sur ledit chemin de données, incitant ledit élément d'équipement de service à contacter son serveur d'administration correspondant et ledit message de ballon d'essai étant en outre acheminé par ledit élément d'équipement de service par lequel il a été reçu à l'élément d'équipement de service successif sur ledit chemin de données ;
lesdits serveurs d'administration, en réponse au fait d'être contactés par leurs éléments d'équipement de service respectifs, configurant lesdits éléments d'équipement de service selon des informations de contexte reçues par lesdits serveurs d'administration.

2. Procédé selon la revendication 1, dans lequel
lesdits éléments d'équipement de service ont une fonctionnalité de lissage et ladite configuration desdits éléments d'équipement de service par lesdits serveurs d'administration implique de les configurer afin de leur permettre de mettre en oeuvre un lissage qui est utilisé pour surveiller la qualité de service le long dudit chemin de données afin de vérifier si ladite qualité est conforme à un accord de niveau de service.

3. Procédé selon la revendication 1 ou 2, comportant en outre les étapes consistant à :
transmettre ledit message de ballon d'essai au moyen desdits éléments d'équipement de service à leurs serveurs d'administration respectifs ;
si l'un desdits serveurs d'administration décide de participer à un processus de comptabilité et/ou d'audit, acheminer, par ledit serveur d'administration, un message d'information de serveur d'administration de gestion au serveur d'administration de gestion étant le serveur qui est responsable du serveur de raccordement de réseau où l'appelant est connecté audit réseau ;
en réponse audit message d'information de serveur d'administration de gestion, transmettre, par ledit serveur d'administration de gestion, un message de transfert de contexte pour transférer des informations de contexte audit serveur d'administration afin de permettre audit serveur d'administration de configurer ledit équipement de service conformément à des exigences de comptabilité et/ou d'audit indiquées par lesdites informations de contexte.

4. Procédé selon l'une quelconque des revendications précédentes, dans lequel
si une réponse au message de ballon d'essai n'est pas renvoyée à l'expéditeur dans une période de temporisation, le message de ballon d'essai est retransmis.

5. Procédé selon l'une quelconque des revendications précédentes, dans lequel
chaque message de ballon d'essai contient un en-tête d'options « bond par bond » identifiant le message de ballon d'essai, dans lequel chaque serveur d'accès au réseau bloque des messages ayant cet en-tête d'options « bond par bond » si les messages proviennent d'un terminal mobile.

6. Procédé selon l'une quelconque des revendications précédentes, dans lequel
les éléments d'équipement de service qui sont configurés participent à la comptabilité et/ou à l'audit d'une session ouverte entre un appelant et une destination ou un appelé ;
le message de ballon d'essai est distribué par le serveur d'accès au réseau auquel l'appelant est connecté et le message de ballon d'essai contenant l'identifiant (ID) de session des sessions de comptabilité et/ou d'audit auxquelles les éléments d'équipement de service devraient participer.

7. Procédé selon la revendication 6, dans lequel
la distribution du message de ballon d'essai est mise en oeuvre en réponse à un message de déclenchement d'envoi de ballon d'essai transmis par le serveur d'administration de gestion du serveur d'accès au réseau auquel l'appelant est connecté audit serveur d'accès au réseau.

8. Procédé selon l'une quelconque des revendications précédentes, dans lequel
le message de ballon d'essai est généré par le serveur d'accès au réseau lorsqu'un utilisateur utilisant son propre terminal mobile demande un service et/ou établit une connexion à un autre utilisateur.

9. Dispositif pour configurer une pluralité d'éléments d'équipement de service localisés le long d'un chemin de données connectant deux éléments au sein d'un réseau, ledit réseau comportant une pluralité de serveurs d'administration, chaque serveur d'administration ayant pour fonction de configurer une pluralité respectivement différente d'éléments d'équipement de service, ledit dispositif comportant :
une unité de transmission pour envoyer un message de ballon d'essai le long dudit chemin de données, ledit message de ballon d'essai, lorsqu'il est reçu par un élément d'équipement de service sur ledit chemin de données, forçant ledit élément d'équipement de service à contacter son serveur d'administration correspondant et ledit message de ballon d'essai étant en outre acheminé par ledit élément d'équipement de service par lequel il a été reçu à l'élément d'équipement de service successif sur ledit chemin de données ;
lesdits serveurs d'administration étant adaptés pour, en réponse au fait d'être contactés par leurs éléments d'équipement de service respectifs, configurer lesdits éléments d'équipement de service conformément à des informations de contexte reçues par lesdits serveurs d'administration.

10. Élément d'équipement de service localisé le long d'un chemin de données connectant deux éléments au sein d'un réseau, ledit réseau comportant une pluralité de serveurs d'administration, chaque serveur d'administration ayant pour fonction de configurer une pluralité respectivement différente d'éléments d'équipement de service, ledit élément d'équipement de service comportant :
une unité de réception pour recevoir un message de ballon d' essai ;
une unité de transmission pour transmettre ledit message de ballon d'essai au moyen dudit élément d'équipement de service à l'élément d'équipement de service successif sur ledit chemin de données ;
ledit élément d'équipement de service étant adapté pour contacter son serveur d'administration correspondant en réponse à la réception dudit ballon d'essai ;
ledit élément d'équipement de service étant en outre adapté pour être configuré par ledit serveur d'administration en réponse au fait que ledit serveur d'administration est contacté par ledit élément d'équipement de service pour configurer ledit élément d'équipement de service conformément à des informations de contexte reçues par ledit serveur d'administration.

11. Serveur d'administration localisé au sein d'un réseau comportant une pluralité d'éléments d'équipement de service localisés le long d'un chemin de données connectant deux éléments dans ledit réseau, ledit serveur d'administration ayant pour fonction de configurer un ou plusieurs éléments d'équipement de service, ledit serveur d'administration comportant :
une unité de réception pour recevoir un message de contact d'un ou plusieurs desdits éléments d'équipement de service en réponse au fait que ledit élément d'équipement de service a reçu un message de ballon d'essai, ledit message de ballon d'essai, lorsqu'il est reçu par un élément d'équipement de service sur ledit chemin de données, incitant ledit élément d'équipement de service à contacter son serveur d'administration correspondant au moyen dudit message de contact et ledit message de ballon d'essai étant en outre transmis, par ledit élément d'équipement de service par lequel il a été reçu, à l'élément d'équipement de service successif sur ledit chemin de données ;
une unité de configuration étant adaptée pour configurer, en réponse au fait que ladite unité de réception est contactée au moyen dudit message de contact par ledit élément d'équipement de service respectif, ledit élément d'équipement de service conformément à des informations de contexte reçues par ledit serveur d'administration.

12. Dispositif selon la revendication 9, dans lequel
lesdits éléments d'équipement de service ont une fonctionnalité de lissage et ladite configuration desdits éléments d'équipement de service par lesdits serveurs d'administration implique de les configurer afin de leur permettre de mettre en oeuvre un lissage qui est utilisé pour surveiller la qualité du service le long dudit chemin de données afin de déterminer si cette qualité est conforme à un accord de niveau de service.

13. Serveur d'administration selon la revendication 11, comportant en outre :
des moyens de ballon d'essai pour, si ledit serveur d'administration décide de participer à un processus de comptabilité et/ou d'audit, transmettre, par ledit serveur d'administration, un message d'information de serveur d'administration de gestion au serveur d'administration de gestion étant le serveur qui est responsable du serveur de raccordement de réseau où l'appelant est connecté audit réseau ;
un moyen pour recevoir, en réponse audit message d'information de serveur d'administration de gestion dudit serveur de gestion, des informations de contexte par ledit serveur d'administration pour permettre audit serveur d'administration de configurer ledit équipement de service conformément à des exigences de comptabilité et/ou d'audit indiquées par lesdites informations de contexte.

14. Dispositif selon la revendication 9, comportant en outre un ou plusieurs des éléments suivants :
des moyens pour transmettre ledit message de ballon d'essai par ledit élément d'équipement de service à ses serveurs d'administration respectifs ;
des moyens pour retransmettre ledit message de ballon d'essai si une réponse au message de ballon d'essai n'est pas renvoyée à l'expéditeur dans une période de temporisation.

15. Dispositif selon l'une quelconque des revendications 9 à 14, dans lequel
chaque message de ballon d'essai contient un en-tête d'options « bond par bond » identifiant le message de ballon d'essai, où chaque serveur d'accès au réseau bloque des messages ayant cet en-tête d'options « bond par bond » si les messages proviennent d'un terminal mobile.

16. Dispositif selon l'une quelconque des revendications 9 à 15, dans lequel
les éléments d'équipement de service qui sont configurés participent à la comptabilité et/ou à l'audit d'une session ouverte entre un appelant et une destination ou un appelé ;
le message de ballon d'essai est distribué par le serveur d'accès au réseau auquel l'appelant est connecté et le message de ballon d'essai contenant l'identifiant (ID) de session des sessions de comptabilité et/ou d'audit auxquelles les éléments d'équipement de service devraient participer.

17. Dispositif selon la revendication 16, dans lequel
la distribution du message de ballon d'essai est mise en oeuvre en réponse à une commande d'envoi de ballon d'essai transmise dudit serveur de gestion du serveur d'accès au réseau auquel l'appelant est connecté audit serveur d'accès au réseau.

18. Programme informatique comportant un code exécutable par un ordinateur, lequel, lorsqu'il est exécuté sur un ordinateur, incite ledit ordinateur à mettre en oeuvre un procédé selon l'une quelconque des revendications 1 à 8.
